(19) **Europäisches Patentamt / European Patent Office / Office européen des brevets**

(11) **EP 2 192 711 A1**

(12) **EUROPEAN PATENT APPLICATION**
published in accordance with Art. 153(4) EPC

(43) Date of publication:
**02.06.2010 Bulletin 2010/22**

(51) Int Cl.:
*H04J 11/00* (2006.01)       *H04B 1/707* (2006.01)

(21) Application number: **08831681.5**

(22) Date of filing: **11.09.2008**

(86) International application number:
**PCT/JP2008/066460**

(87) International publication number:
**WO 2009/038018 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007245651**

(71) Applicant: **Sharp Kabushiki Kaisha**
**Osaka-shi, Osaka 545-8522 (JP)**

(72) Inventors:
• **YAMADA, Ryota**
  **Osaka-shi, Osaka 545-8522 (JP)**

• **YOSHIMOTO, Takashi**
  **Osaka-shi, Osaka 545-8522 (JP)**
• **NOGAMI, Toshizo**
  **Osaka-shi, Osaka 545-8522 (JP)**
• **SHIMEZAWA, Kazuyuki**
  **Osaka-shi, Osaka 545-8522 (JP)**

(74) Representative: **Müller - Hoffmann & Partner Patentanwälte**
**Innere Wiener Strasse 17**
**81667 München (DE)**

(54) **RADIO TRANSMISSION DEVICE, RADIO COMMUNICATION SYSTEM AND RADIO TRANSMISSION METHOD**

(57)     A wireless transmission device which communicates with a wireless reception device, includes: a reception quality setting unit which sets the reception quality of at least one code channel among a plurality of code channels to be multiplexed to be different from the reception quality of the other code channels; and a transmitting unit which transmits a signal which has the reception quality set by the reception quality setting unit and is generated by multiplexing the plurality of code channels, to the wireless reception device.

FIG. 1

EP 2 192 711 A1

**Description**

TECHNICAL FIELD

The present invention relates to a wireless transmission device, a wireless communication system and a wireless transmission method. The present application claims priority based on Japanese Patent Application No. 2007-245651, filed on September 21, 2007, the contents of which will be incorporated herein by reference.

BACKGROUND ART

In a transmission device which employs an MC-CDMA (Multi-Carrier Code Division Multiple Access) method and an OFCDM (Orthogonal Frequency and Code Division Multiplexing) method which are used as basic technologies of a wireless interface, information symbols are repeated (copied) to continuous subcarriers corresponding to a spreading ratio, and spreading codes are multiplied by the repeated subcarriers (hereinafter, referred to as frequency axis spreading).

Since symbols of the subcarriers are frequency-axis-spread with dividable spreading codes, it is possible to perform code division multiplexing therefor. A reception device performs despreading using the spreading codes in which desired information symbols are spread to extract the desired information symbols, and performs a demodulating process by restoring information transmitted in each subcarrier.

The MC-CDMA method and the OFCDM method operating as described above are disclosed in a Non-Patent Document 1. In a reception device of the MC-CDMA method and the OFCDM method, in order to obtain information symbols with a high degree of accuracy from a code division multiplexed signal, it is necessary to accurately maintain orthogonality between spreading code sequences. However, in mobile communication environments, due to frequency selective fading, the amplitude and the phase of a signal which indicates the information symbols vary, and thus, the orthogonality between codes may be collapsed.

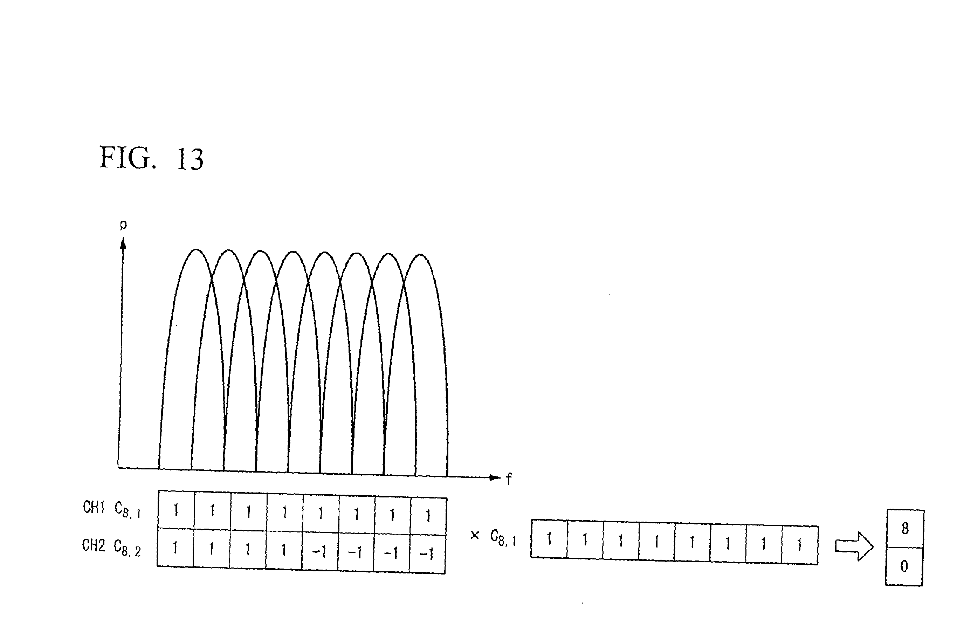

FIG 13 illustrates an example of a result of a despreading process in the case that a signal which is transmitted to a reception device from a transmission device does not undergo fading. In a graph in FIG 13, the horizontal axis represents frequency f; and the vertical axis represents reception power p.

As shown in FIG 13, over each subcarrier, spreading codes (1, 1, 1, 1, 1, 1, 1, 1) of $C_{8.1}$ are multiplied by a channel CH1, respectively; and spreading codes (1, 1, 1, 1, -1, -1, -1, -1) of $C_{8.2}$ are multiplied by a channel CH2, respectively. Further, a signal generated by code division multiplexing of the channel CH1 and the channel CH2 passes through a propagation channel which does not undergo the fading, and is received in the reception device. FIG. 13 illustrates the case that the despreading process for the multiplexed signal is performed by the spreading codes (1, 1, 1, 1, 1, 1, 1, 1) of $C_{8.1}$ which are multiplied by the channel CH1.

As a result of the despreading process, a component of the channel CH1 by which the spreading codes (1, 1, 1, 1, 1, 1, 1, 1) of $C_{8.1}$ are multiplied becomes 8, and a component of the channel CH2 by which the spreading codes (1, 1, 1, 1, -1, -1, -1, -1) of $C_{8.2}$ are multiplied becomes 0, thereby extracting a signal of the channel CH1. That is, the channel CH2 maintains orthogonality with respect to the channel CH1.

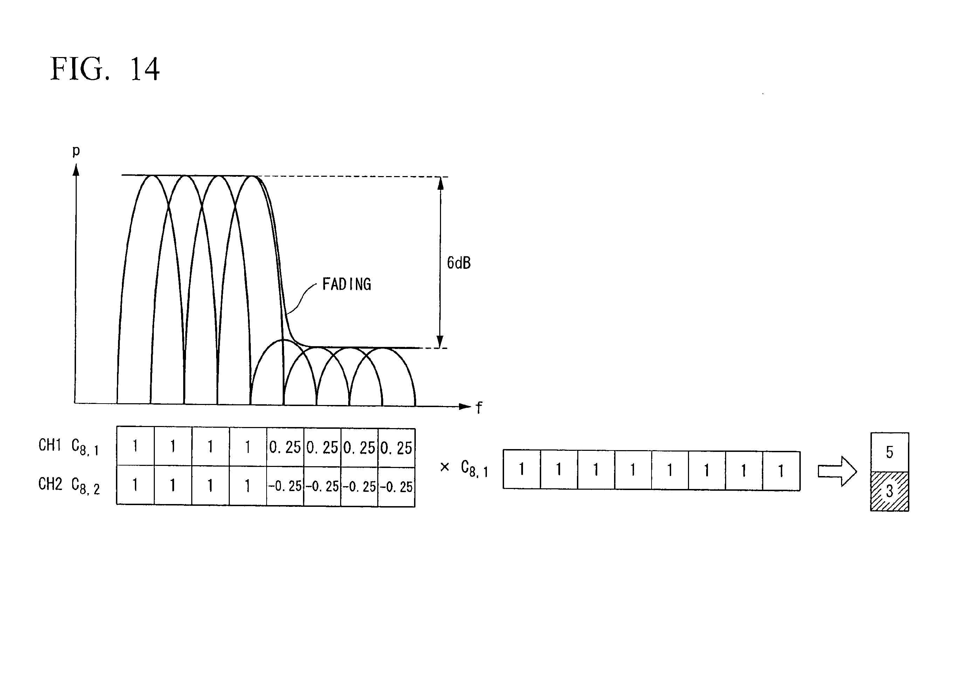

FIG. 14 illustrates an example of a result of a despreading process in the case that a signal which is transmitted to a reception device from a transmission device undergoes fading. In a graph in FIG. 14, the horizontal axis represents frequency f; and the vertical axis represents reception power p.

As shown in FIG. 14, as a result of the fading, over each subcarrier, spreading codes (1, 1, 1, 1, 0.25, 0.25, 0.25, 0.25) of $C'_{8.1}$ are multiplied by the channel CH1, respectively; and spreading codes (1, 1, 1, 1, -0.25, -0.25, -0.25, -0.25) of $C'_{8.2}$ are multiplied by the channel CH2, respectively. Further, a signal generated by code division multiplexing of the channel CH1 and the channel CH2 passes through a propagation channel which undergoes fading, and is received in the reception device.

FIG. 14 illustrates the case that the despreading process for the multiplexed signal is performed by the spreading codes (1, 1, 1, 1, 1, 1, 1, 1) of $C_{8.1}$ of the channel CH1.

As a result of the despreading process, a component of the channel CH1 becomes 5, a component of the channel CH2 becomes 3, thereby obtaining a demodulation signal having the size of 5+3=8. However, an interference component of the CH2 is generated with respect to the CH1, and thus, the orthogonality is collapsed.

As shown in FIG. 14, in the reception device, if the despreading process is performed in a state that the orthogonality between the spreading code sequence is collapsed, an interference component due to a signal by information symbols other than desired information symbols becomes large, and thus, it is impossible to extract the information symbols with a high degree of accuracy, thereby deteriorating transmission quality.

As a solution for solving these problems, there is a SIC (Successive Interference Canceller unit) as disclosed in a Non-Patent Document 2 and a Non-Patent Document 3. The SIC disclosed in the Non-Patent Document 2 and the Non-Patent Document 3 uses a procedure in which the SIC performs despreading, demodulation and decoding, obtains a determination signal of the information symbols, and subtracts a replica signal made by using the determination result from the reception signal, from a channel signal having large reception signal power or SINR (Signal to Interference plus Noise power Ratio) of each channel signal among reception signals which are being code-division-multiplexed.

By repeating the above described procedure, it is possible to remove a signal other than a desired channel signal with a high degree of accuracy and to prevent characteristic deterioration due to the collapse of the orthogonality between the spreading code sequences.

As described above, by calculating an information signal of each channel from signals generated by sequentially subtracting output signals of FFT (Fast Fourier Transform) according to a signal detection order determined by the reception signal power or the SINR of each channel, it is possible to prevent characteristic deterioration due to the collapse of the orthogonality of the spreading code sequences.

Non-Patent Document 1: "VSF-OFCDM USING 2-DIMENTIONAL SPREADING AND CHARACTERISTICS THEREOF" by MAEDA, ARATA, ABETA and SAWAHASHI, Technology Report RCS2002-61 by The Institute of Electronics, Information and Communication Engineers, May 2002.

Non-Patent Document 2: "DS-CDMA FREQUENCY AREA MAI CANCELLER" by ISHIHARA, TAKEDA and ADACHI, Technology Report RCS 2004-316 by The Institute of Electronics, Information and Communication Engineers, January, 2005.

Non-Patent Document 3: "INTERFERENCE CANCELLER IN DOWNLINK USING TRANSMISSION POWER CONTROL OF MC-CDMA" by AKITA, SUYAMA, FUKAWA and SUZUKI, Technology Report RCS 2002-35 by The Institute of Electronics, Information and Communication Engineers, April, 2002.

DISCLOSURE OF INVENTION

Problem to be Solved by the Invention

In the case that a channel signal detection order is determined based on an estimation result of a state of a propagation channel state such as reception signal power and SINR of each channel signal, like the SIC in the related art, if the SINR or the reception signal power of each channel signal among the reception signals is the same, it is difficult to make a replica signal and to appropriately determine the order in which each channel signal is subtracted from the reception signals, when each channel signal is divided.

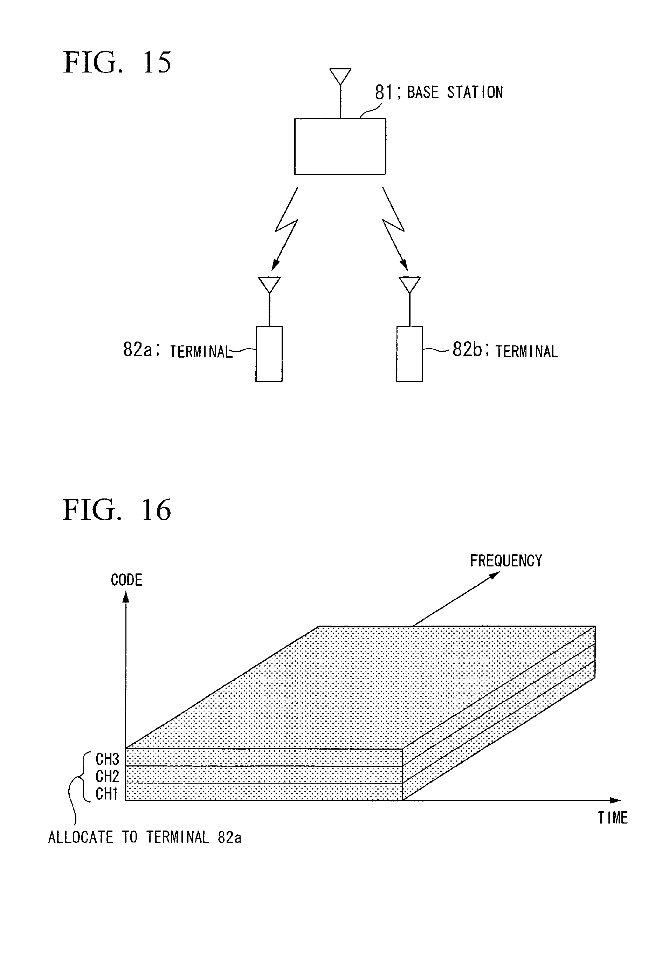

FIG. 15 illustrates a configuration of a wireless communication system in the related art. here, the communication system includes a base station 81, a terminal 82a and a terminal 82b. For example, in a downlink in the wireless communication system, the base station 81 of a transmission device simultaneously transmits a signal which has the same signal power of each channel and is code-division-multiplexed (CDM), toward the plurality of terminals 82a and 82b.

FIG 16 illustrates an example of a signal which is transmitted to the terminals 82a and 82b from the base station 81 in the related art. In FIG. 16, the horizontal axis represents time; and the vertical axis represents frequency; and an axis which is perpendicular to the horizontal axis and the vertical axis represents a code.

The base station 81 may allocate a plurality of channel signals which are code-division-multiplexed to one terminal, among all channel signals which are simultaneously code-division-multiplexed to a plurality of terminals. In FIG. 16, the terminal 82a occupies all the channels CH1, CH2 and CH3 which are code-division-multiplexed.

In the case that the base station 81 transmits all the channel signals with the same signal power, all the channel signals undergo the same frequency fading, and thus, a difference does not occur in the reception signal power or the SINR of each channel.

In such a case, the terminals 82a and 82b of the reception device cannot determine the order in which non-desired signals are removed by the reception signal power or the SINR of each channel in the SIC, and cannot appropriately determine the order in which each channel signal is subtracted from the reception signals when dividing each channel signal.

In consideration of the foregoing problems, an object of the invention is to provide a wireless transmission device, a wireless communication system and a wireless transmission method in which a wireless reception device which receives a signal generated by multiplexing a plurality of code channels from the wireless transmission device is capable of detecting each code channel in an appropriate order.

Means for Solving the Problem

(1) In order to solve the problems, according to an aspect of the invention, there is provided a wireless transmission device which communicates with a wireless reception device, including: a reception quality setting unit which sets the reception quality of at least one code channel among a plurality of code channels to be multiplexed to be different from the reception quality of the other code channels; and a transmitting unit which transmits a signal which has the reception quality set by the reception quality setting unit and is generated by multiplexing the plurality of code channels, to the wireless reception device.

In the invention, since the reception quality setting unit performs setting so that the reception quality of at least one code channel among the plurality of code channels to be multiplexed is different from the reception quality of the other code channels, and the transmitting unit transmits the signal which has the reception quality set by the reception quality setting unit and is generated by multiplexing the plurality of code channels, to the wireless reception device, the wireless reception device which receives the signal generated by multiplexing the plurality of code channels can detect each code channel in an appropriate order.

(2) Further, according to another aspect of the invention, the reception quality setting unit of the wireless transmission device performs setting so that the average of the reception quality of the plurality of code channels to be multiplexed is the same between the plurality of code channels to be multiplexed.

(3) In addition, according to still another aspect of the invention, the reception quality setting unit of the wireless transmission device performs setting so that a reception quality of at least one code channel group among a plurality of code channel groups to be multiplexed which is grouped from the plurality of code channels is different from the reception quality of the other code channel groups.

(4) Further, according to a further aspect of the invention, the reception quality setting unit of the wireless transmission device performs setting so that the average of the reception quality of the plurality of code channel groups to be multiplexed is the same between the plurality of code channel groups to be multiplexed.

(5) Further, according to a further aspect of the invention, the reception quality setting unit of the wireless transmission device performs setting so that a reception quality to be set to each code channel is higher than the lowest reception quality.

(6) Further, according to a further aspect of the invention, the reception quality setting unit of the wireless transmission device determines the lowest reception quality based on a multiplexed number of the code channels.

(7) Further, according to a further aspect of the invention, the reception quality setting unit of the wireless transmission device uses a modulation method or a coding rate as the reception quality.

(8) In addition, according to a further aspect of the invention, the reception quality setting unit of the wireless transmission device uses transmission power as the reception quality.

(9) Further, according to a further aspect of the invention, the reception quality setting unit of the wireless transmission device sets the reception quality of the code channels based on reception quality information which is notified from the wireless reception device.

(10) Moreover, according to a further aspect of the invention, a wireless communication system comprises a wireless transmission device and a wireless reception device. The wireless transmission device includes: a reception quality setting unit which sets the reception quality of at least one code channel among a plurality of code channels to be multiplexed to be different from the reception quality of the other code channels; and a transmitting unit which transmits a signal which has the reception quality set by the reception quality setting unit and is generated by multiplexing the plurality of code channels, to the wireless reception device. The wireless reception device includes: a reception unit which receives a signal transmitted by the transmitting unit and generated by multiplexing the plurality of code channels; and a code channel detecting unit which detects a code channel having a high reception quality earlier than a code channel having a low reception quality from the signal generated by multiplexing the plurality of code channels.

(11) Further, according to a further aspect of the invention, a wireless communication method uses a wireless transmission device which communicates with a wireless reception device, and includes: setting the reception quality of at least one code channel among a plurality of code channels to be multiplexed to be different from the reception quality of the other code channels; and transmitting a signal which has a reception quality set in the reception signal setting process and is generated by multiplexing the plurality of code channels, to the wireless reception device.

Effect of the Invention

In the wireless transmission device, wireless communication system and wireless transmission method, a wireless reception device which receives a signal generated by code division multiplexing a plurality of code channels from the wireless transmission device can detect each code channel in an appropriate order.

BRIEF DESCRIPTION OF THE DRAWINGS

FIG. 1 is a schematic block diagram illustrating the configuration of a wireless transmission/reception device 100a according to a first embodiment of the present invention.
FIG. 2 illustrates an example of MCS information used in the first embodiment of the present invention.
FIG. 3 is a schematic block diagram illustrating the configuration of a reception quality control unit 35 (FIG. 1) according to the first embodiment of the present invention.
FIG. 4 illustrates an example of a method for making a difference to MCSs according to the first embodiment of the present invention, compared with the related art.
FIG. 5 is a block diagram illustrating the configuration of a wireless transmission/reception device 200a according to the first embodiment of the present invention.
FIG. 6 is a schematic block diagram illustrating the configuration of a reception data detecting unit 7 (FIG. 5) according to the first embodiment of the present invention.
FIG. 7 is a schematic block diagram illustrating the configuration of a successive canceller unit 18 (FIG. 6) according to the first embodiment of the present invention.
FIG. 8 is a schematic block diagram illustrating the configuration of a code channel replica generating unit 21-m (m=1 to (N-1)) (FIG. 7) according to the first embodiment of the present invention.
FIG. 9 is a schematic block diagram illustrating the configuration of a wireless transmission/reception device 100b in a second embodiment.
FIG. 10 is a schematic block diagram illustrating the configuration of a reception quality control unit 53 (FIG. 9) in the second embodiment of the present invention.
FIG 11 is a schematic block diagram illustrating the configuration of a wireless transmission/reception device 100c according to a third embodiment of the present invention.
FIG. 12 is a schematic block diagram illustrating the configuration of a wireless transmission/reception device 200c according to the third embodiment of the present invention.
FIG. 13 illustrates an example of a result of a despreading process in the case that a signal transmitted to a reception device from a transmission device does not undergo fading.
FIG. 14 illustrates an example of a result of a despreading process in the case that a signal transmitted to a reception device from a transmission device undergoes fading.
FIG. 15 illustrates a configuration of a wireless communication system in the related art.
FIG. 16 illustrates an example of a signal which is transmitted to terminals 82a and 82b from a base station 81 in the related art.

Reference Symbols

| | |
|---|---|
| 1 | ANTENNA |
| 2 | WIRELESS RECEPTION UNIT |
| 3 | A/D CONVERSION UNIT |
| 4 | GI REMOVING UNIT |
| 5 | FFT UNIT |
| 6 | DEMULTIPLEXING UNIT |
| 7 | RECEPTION DATA DETECTING UNIT |
| 8 | PROPAGATION CHANNEL ESTIMATING UNIT |
| 9 | DEMODULATION CONTROL UNIT |
| 10 | MCS DETERMINING UNIT |
| 11 | REPORTING INFORMATION GENERATING UNIT |
| 12 | ENCODING UNIT |
| 13 | MODULATION UNIT |
| 14 | MULTIPLEXING UNIT |
| 15 | D/A CONVERSION UNIT |
| 16 | WIRELESS TRANSMISSION UNIT |
| 29-1 to 29-N | CODE CHANNEL SIGNAL GENERATING UNIT |
| 30 | MULTIPLEXING UNIT |
| 31 | IFFT UNIT |
| 32 | GI INSERTING UNIT |
| 33 | D/A CONVERSION UNIT |
| 34 | WIRELESS TRANSMISSION UNIT |
| 35 | RECEPTION QUALITY CONTROL UNIT |
| 36 | NOTIFICATION INFORMATION GENERATING UNIT |
| 37 | PILOT GENERATING UNIT |
| 38 | WIRELESS RECEPTION UNIT |
| 39 | A/D CONVERSION UNIT |
| 40 | DEMULTIPLEXING UNIT |
| 41 | DEMODULATION UNIT |
| 42 | DECODING UNIT |
| 43 | ANTENNA |
| 44 | ENCODING UNIT |
| 45 | MODULATION UNIT |
| 46 | SPREADING UNIT |
| 47-1 to 47-N | CODE CHANNEL SIGNAL GENERATING unit |
| 48 | MULTIPLEXING UNIT |
| 49 | IFFT UNIT |
| 50 | GI INSERTING UNIT |
| 51 | D/A CONVERSION UNIT |
| 52 | WIRELESS TRANSMISSION UNIT |
| 53 | RECEPTION QUALITY CONTROL UNIT |
| 54 | NOTIFICATION INFORMATION GENERATING UNIT |
| 55 | PILOT GENERATING UNIT |
| 56 | WIRELESS RECEPTION UNIT |
| 57 | A/D CONVERSION UNIT |
| 58 | DEMULTIPLEXING UNIT |
| 59 | DEMODULATION UNIT |
| 60 | DECODING UNIT |
| 61 | ANTENNA |
| 62 | ENCODING UNIT |
| 63 | MODULATION UNIT |
| 64 | SPREADING UNIT |

| 65 | POWER SETTING UNIT |
| 66 | REPORTING INFORMATION GENERATING UNIT |
| 67 | RECEPTION QUALITY CONTROL UNIT |
| 100a | to 100c WIRELESS TRANSMISSION/RECEPTION DEVICE 200 a, 200c WIRELESS TRANSMISSION/ RECEPTION DEVICE |

BEST MODE FOR CARRYING OUT THE INVENTION

Hereinafter, first to third embodiments will be described with reference to the accompanying drawings. Firstly, a first embodiment of the present invention will be described.

(First embodiment)

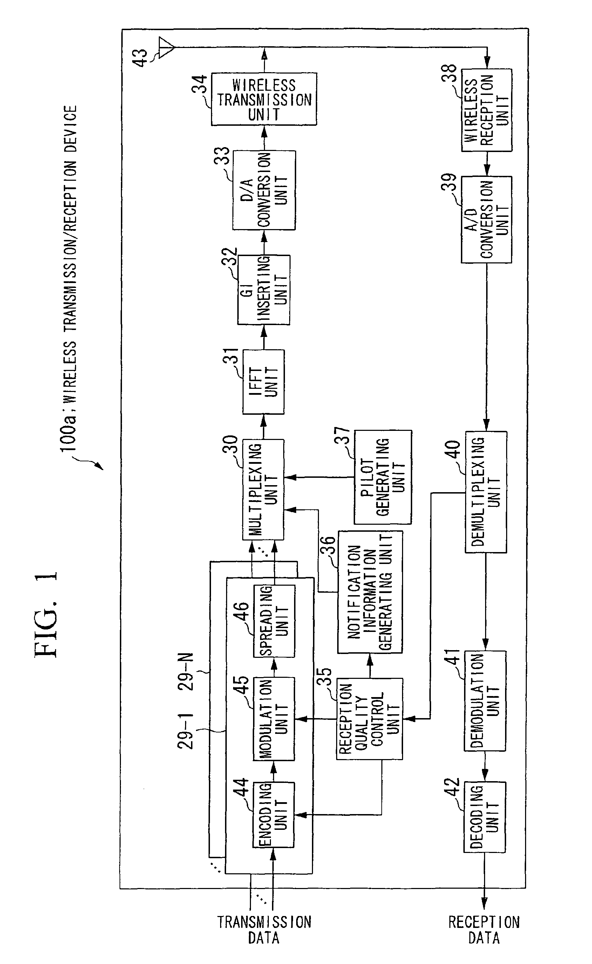

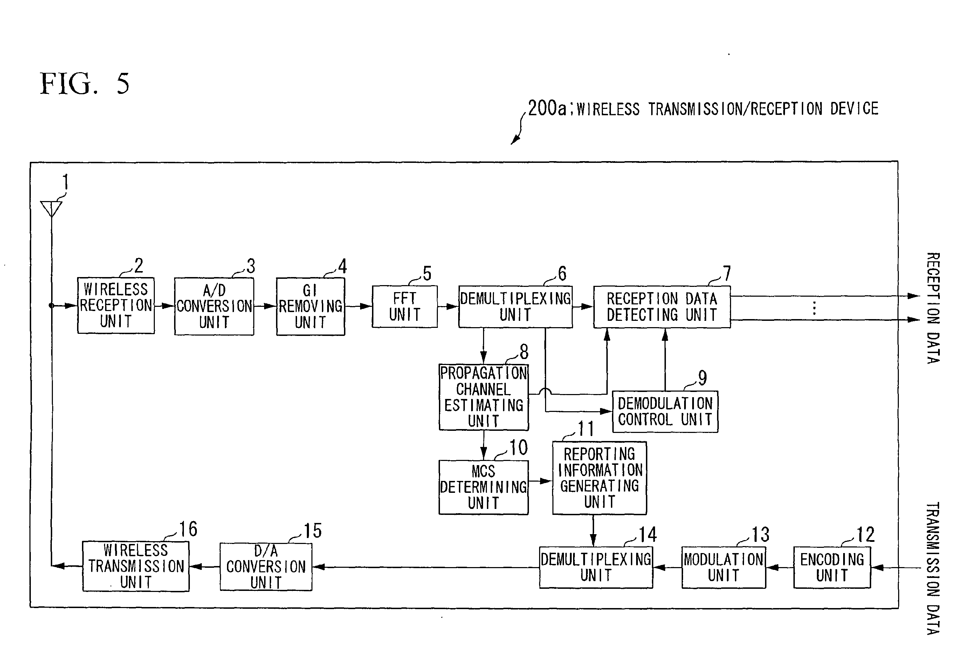

A wireless communication system according to an embodiment of the present invention includes a wireless transmission/reception device 100a (FIG. 1) and a wireless transmission/reception device 200a (FIG. 5). In the respective embodiments which will be described, the wireless transmission/reception device 100a transmits a signal which is code-division-multiplexed using a difference in reception quality to one wireless transmission/reception device for communication.

FIG. 1 is a schematic block diagram illustrating the configuration of a wireless transmission/reception device 100a according to a first embodiment of the present invention. The wireless transmission/reception device 100a includes code channel signal generating units 29-1 to 29-N, a multiplexing unit 30, an IFFT (Inverse Fast Fourier Transform) unit 31, a GI inserting unit 32, a D/A conversion unit 33, a wireless transmission unit 34 (also to be referred to as a transmitting unit), a reception quality control unit 35 (also to be referred to as a reception quality setting unit), a notification information generating unit 36, a pilot generating unit 37, a wireless reception unit 38, an A/D conversion unit 39, a demultiplexing unit 40, a demodulation unit 41, a decoding unit 42, and an antenna 43.
Further, each of the code channel signal generating units 29-1 to 29-N includes an encoding unit 44, a modulation unit 45 and a spreading unit 46.

Transmission data is firstly input to the code channel signal generating units 29-1 to 29-N to generate each code channel signal. In the code channel signal generating units 29-1 to 29-N, error-correction coding is performed using an error-correction code such as a convolution code or a turbo code in the encoding unit 44.
The error-correction-coded transmission data is mapped to modulation symbols such as QPSK (Quadrature Phase Shift Keying) or 16 QAM (16 Quadrature Amplitude Modulation) in the modulation unit 45.
A coding rate in the encoding unit 44 and a modulation method in the modulation unit 45 are determined based on reception quality control information output from the reception quality control unit 35.

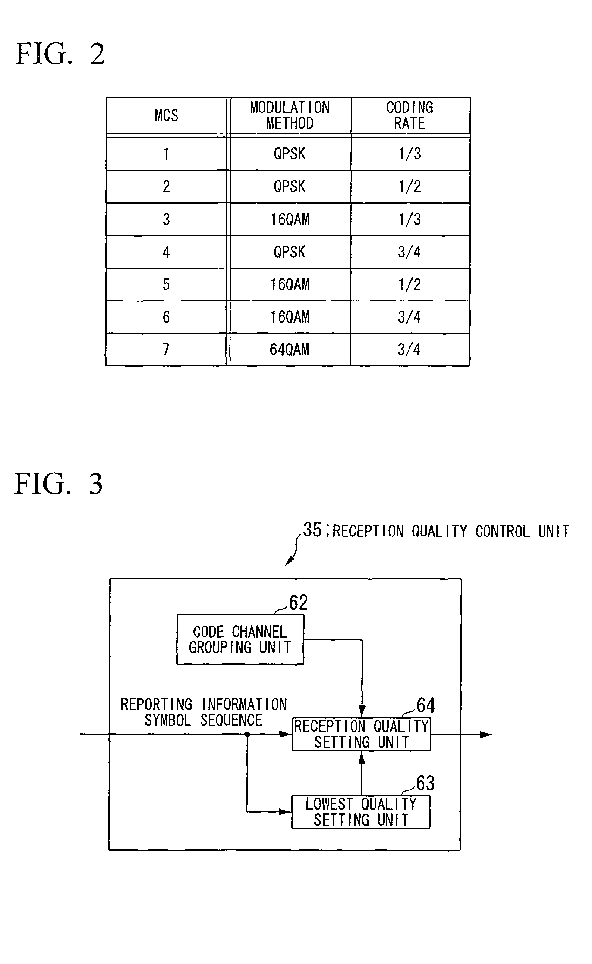

FIG 2 illustrates an example of MCS information used in the first embodiment of the present invention. An MCS refers to a combination of the modulation method and the coding rate. As the numerical value of the MCS increases, the transmission rate thereof increases. here, for example, in the case that the MCS is 1, the modulation method is the QPSK; the amount of information is 2 bits per every symbol; and the coding rate is 1/3. In the case that the MCS is 2, the modulation method is the QPSK; the amount of information is 2 bits per every symbol; and the coding rate is 1/2. In the case that the MSC is 3, the modulation method is the 16 QAM; the amount of information is 4 bits per every symbol; and the coding rate is 1/3. In the case that the MCS is 4, the modulation method is the QPSK; the amount of information is 2 bits per every symbol; and the coding rate is 3/4. In the case that the MCS is 5, the modulation method is the 16 QAM; the amount of information is 4 bits per every symbol; and the coding rate is 1/2. In the case that the MCS is 6, the modulation method is the 16 QAM; the amount of information is 4 bits per every symbol; and the coding rate is 3/4.
In the case that the MCS is 7, the modulation method is 64 QAM, the amount of information is 6 bits per every symbol; and the coding rate is 3/4. That is, as the MCS is increased from 1 to 7, product of the information amount per every symbol according to the modulation method and the coding rate is increased and the transmission rate thereof is increased. However, in the case that the reception power is the same, the reception quality thereof is deteriorated.

Turning to FIG. 1, the output of the modulation unit 45 is output to the spreading unit 46 and is spread using a spreading code corresponding to each code channel. Outputs of the code channel signal generating units 29-1 to 29-N are input to the multiplexing unit 30, to multiplex a signal quality notification signal for notifying a reception device of reception quality control information which is an output of the notification information generating unit 36 and a pilot signal which is an output of the pilot signal generating unit 37.
The output of the multiplexing unit 30 is frequency-time-transformed in the IFFT unit 31, is guard-interval-inserted in the GI inserting unit 32, is D/A-converted in the D/A conversion unit 33, is wireless-frequency-transformed in the wireless transmission unit 34, and then is transmitted to the wireless transmission/reception device 200a (FIG. 5) through the antenna 43.

The reception quality control information is generated based on a signal transmitted from the wireless transmission/reception device 200a. Firstly, the signal received from the wireless transmission/reception device 200a through the antenna 43 is transformed into a base band signal in the wireless reception unit 38 and then is A/D-converted in the A/D conversion unit 39. An output of the A/D conversion unit 39 is divided into a data symbol sequence and a reporting information symbol sequence in the demultiplexing unit 40.

The data symbol sequence output from the demultiplexing unit 40 is demodulation-processed in the demodulation unit 41 and is error-correction-decoding-processed in the decoding unit 42, so as to extract reception data.

Meanwhile, the reporting information symbol sequence output from the demultiplexing unit 40 is input to the reception quality control unit 35. The reception quality control unit 35 outputs reception quality control information which is information such as a modulation method or a coding rate to the encoding unit 44 and the modulation unit 45, based on reporting information indicated by the reporting information symbol sequence. Further, the reception quality control unit 35 outputs the reception quality control information to the notification information generating unit 36. The notification information generating unit 36 generates a reception quality notification signal for notifying the reception device of the reception quality control information.

FIG. 3 is a schematic block diagram illustrating the configuration of the reception quality control unit 35 (FIG 1) according to the first embodiment of the present invention. The reception quality control unit 35 includes a code channel grouping unit 62, a lowest quality setting unit 63, and a reception quality setting unit 64.

The code channel grouping unit 62 makes code channels be grouped. For example, in the case that code channels #1 to #6 are grouped, the code channels are grouped into the code channels #1 and #2, the code channels #3, #4 and #5, and the code channel #6.

If there is no code channel which belongs to a plurality of groups, the number of code channels included in the group is arbitrary, and also may be 1. Code channel group information obtained by grouping the code channels as described above is output to the reception quality setting unit 64.

The lowest quality setting unit 63 sets a lowest quality which may be given in the wireless transmission/reception device 100a by the reporting information system sequence and the number of the code channels. The MCS is calculated from the reporting information symbol sequence, based on the reporting information indicated by the reporting information symbol sequence. The MCS is used for performing code division multiplexing using the MCS with respect to each code channel in the related art. The lowest quality is set to a highest data rate which is capable of communication when a code-division-multiplexed number is 1. For example, in the case that the number of code channels is N, an MCS calculated by correcting $10 \log_{10} (N-1)$ in a threshold value of adaptive modulation from the reporting information is the highest data rate and is set as the lowest quality. The set MCS is output to the reception quality setting unit 64 as the lowest quality information.

The reception quality setting unit 64 sets an MCS in each code channel, based on the code channel group information and the lowest quality information, in the case that the MCS calculated from the reporting information is an average data rate. The MCS in each code channel is set so as not to exceed an MCS which becomes the input lowest quality.

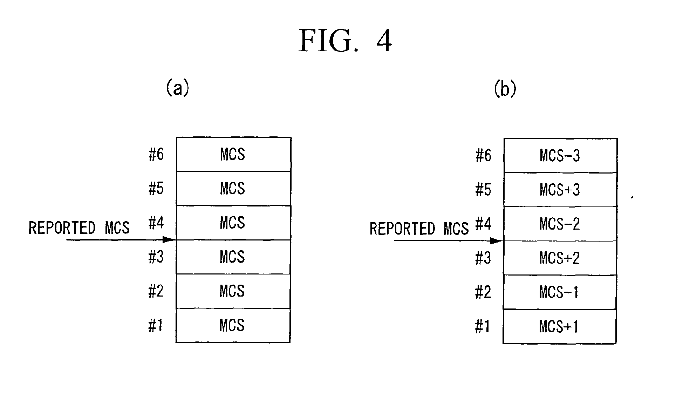

FIGs. 4(a) and 4(b) illustrate an example of a method for making a difference to MCSs according to the first embodiment of the present invention, compared with the related art. In the related art, as shown in FIG. 4(a), code division multiplexing is performed using the same MCSs which are reported in the respective code channels #1 to #6. In this embodiment, as shown in FIG. 4(b), the reception quality is differentiated by varying the MCS for each of the code channels #1 to #6, based on the reported MCS.

As a method for setting the MCS, the average MCS value in the code channel group is set to the same level as the MCS which is reported by the wireless transmission/reception device 200a, in the input code channel group information.

Hereinafter, description will be made with reference to FIG. 4(b), which illustrates 6 code division multiplexing. The code channel groups include a code channel group of the code channels #1 and #2, a code channel group of the code channels #3 and #4, and a code channel group of the code channels #5 and #6, respectively. In the case that different MCSs are used in the respective code channels, different MCS correction values may be set for every code channel group.

In the example of FIG. 4(b), in the case of the code channels #1 and #2, a correction value is set to 1, in the case of the code channels #3 and #4, a correction value is set to 2, and in the case of the code channels #5 and #6, a correction value is set to 3. In this case, MCSs in the respective code channel groups become (MCS + correction value) and (MCS - correction value). However, in the case that one code channel is grouped, the reported MCS may be used without correction.

Further, in the case that more than 2 code channels are grouped, the correction value in the group may not be one. For example, in the case that three code channels are grouped, the correction values in the three code channels may be respectively MCS, (MCS - 1) and (MCS + 1), or (MCS + 3), (MCS - 2) and (MCS - 1). In this case, (MCS + correction value) is set not to exceed the MCS which becomes the lowest quality.

FIG. 5 is a block diagram illustrating the configuration of a wireless transmission/reception device 200a according to the first embodiment of the present invention. The wireless transmission/reception device 200a includes an antenna 1, a wireless reception unit 2 (also to be referred to as a reception unit), an A/D (Analog/Digital) conversion unit 3, the GI (Guard Interval) removing unit 4, an FFT (Fast Fourier Transform) unit 5, a demultiplexing unit 6, a reception data detecting unit 7 (also to be referred to as a code channel detecting unit), a propagation channel estimating unit 8, a demodulation control unit 9, an MCS (Modulation and Coding Scheme) determining unit 10, a reporting information generating unit 11, an encoding unit 12, a modulation unit 13, a multiplexing unit 14, a D/A (Digital/Analog) conversion unit 15, and a wireless transmission unit 16.

A signal received through the antenna 1 is transformed into a base band signal in the wireless reception unit 2, is A/D-converted in the A/D conversion unit 3, is guard-interval-removed in the GI removing unit 4, and is time-frequency-transformed in the FFT unit 5.

The output of the FFT unit 5 is input to the demultiplexing unit 6, to divide a pilot signal multiplexed in the transmission device and the reception quality notification signal. The pilot signal is input to the propagation channel estimating unit 8 and the reception quality notification signal is input to the demodulation control unit 9.

The propagation channel estimating unit 8 performs propagation channel estimation based on the pilot signal and calculates a propagation channel estimation value for each subcarrier. In addition, the demodulation control unit 9 generates reception quality information based on the reception quality notification signal. The propagation channel estimation value is input to the reception data detecting unit 7 and the MCS determining unit 10, and the demodulation control information is input to the reception data detecting unit 7.

The MCS determining unit 10 determines the reception quality based on the input propagation channel estimation value and outputs information indicating an MCS to the reporting information generating unit 11. The reporting information generating unit 11 generates reporting information symbol sequences for reporting the information indicating the MCS to the wireless transmission/reception device to be communicated and outputs the generated reporting information symbol sequences to the multiplexing unit 14. The multiplexing unit 14 multiplexes the reporting information symbol sequences with respect to transmission data which is error-correction-coded and modulated in the encoding unit 12 and the modulation unit 13. A signal output from the multiplexing unit 14 is D/A-converted in the D/A conversion unit 15, is wireless-frequency-transformed in the wireless transmission unit 16 and then is transmitted to the wireless transmission/reception device 100a through the antenna 1.

The reception data detecting unit 7 detects data transmitted from the wireless transmission/reception device 100a and outputs the detected data to an upper layer of the wireless transmission/reception device 200a.

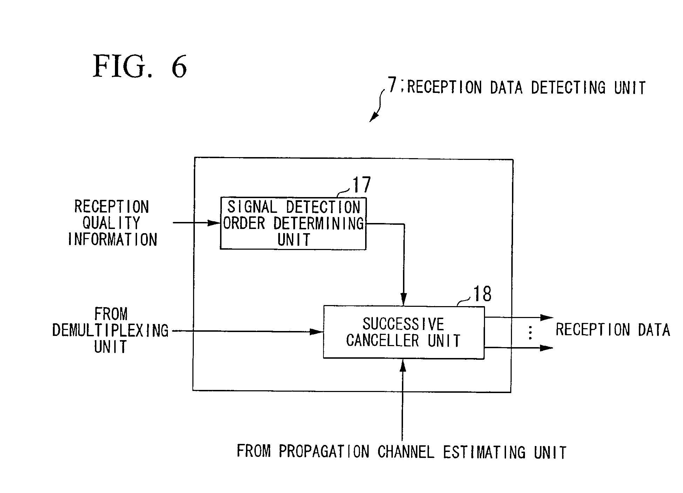

FIG. 6 is a schematic block diagram illustrating the configuration of the reception data detecting unit 7 (FIG. 5) according to the first embodiment of the present invention. The reception data detecting unit 7 includes a signal detection order determining unit 17 and a successive canceller unit 18.

The signal detection order determining unit 17 determines the signal detection order based on reception quality which is set in the wireless transmission/reception device 100a.

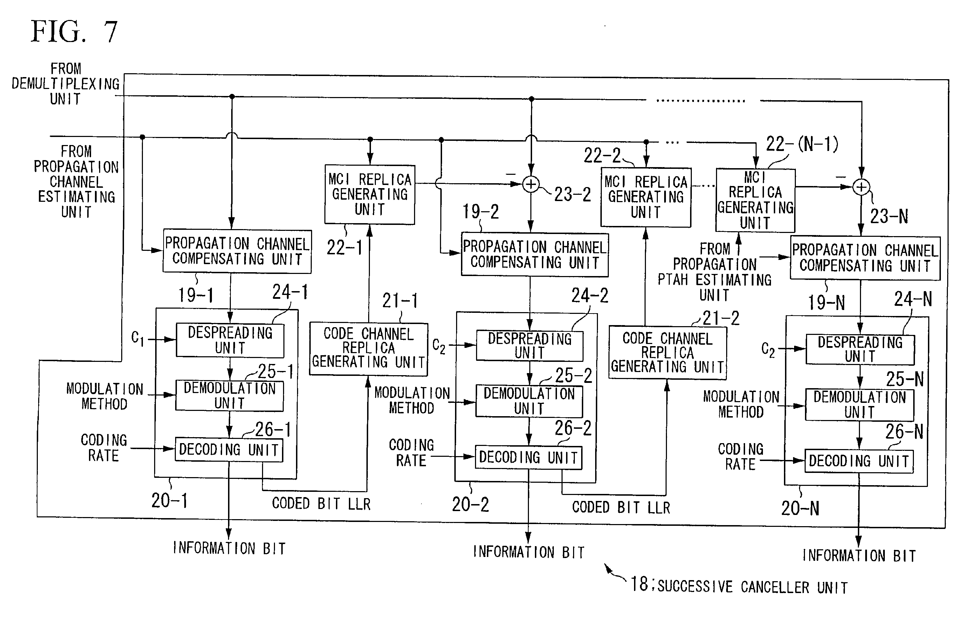

FIG. 7 is a schematic block diagram illustrating the configuration of the successive canceller unit 18 (in FIG. 6) according to the first embodiment of the present invention. The successive canceller unit 18 includes propagation channel compensating units 19-1, 19-2 to 19-N (N is a natural number which is 2 or more than 2), code channel signal detecting units 20-1, 20-2 to 20-N, code channel replica generating units 21-1, 21-2 to 21-(N-1), MCI replica generating units 22-1, 22-2 to 22-(N-1), and adding units 23-2 to 23-N. The code channel replica generating unit 21-(N-1) is not shown herein.

Further, the code channel signal detecting units 20-1 to 20-N include despreading units 24-1, 24-2 to 24-N, demodulation units 25-1, 25-2 to 25-N, and decoding units 26-1, 26-2 to 26-N.

The successive canceller unit 18 uses successive interference cancelation (SIC) which performs data detection and interference removal for every code channel signal, in an order which is set by a signal removing order notification signal. Hereinafter, the case that the signal detection order is set in the order of $C_1$ to $C_N$ will be described.

Firstly, the propagation channel compensating unit 19-1 performs propagation channel compensation for a signal input from the demultiplexing unit 6 (Fig. 5), using a weighting factor which employs, for example, a ZF (Zero-Forcing) standard, an MMSE (Minimum Mean Square Error) standard or the like which are known, based on the propagation channel estimation value estimated in the propagation channel estimating unit 8 (FIG. 5).

In addition, data on $C_1$ is detected in the code channel signal detecting unit 20-1. A signal after the propagation channel compensation is despreaded using the spreading code $C_1$ in the despreading unit 24-1, is demodulation-processed according to a modulation method included in the signal detection order notification information in the demodulation unit 25-1, and then is output as a coding bit LLR (Log Likelihood Ratio).

The decoding unit 26-1 performs an error correction process according to the coding rate included in the signal detection order notification information, outputs the information bit for the $C_1$ to the outside of the successive canceller unit 18 and simultaneously outputs the coding bit LLR to the code channel replica generating unit 21-1.

The coding bit LLR output from the decoding unit 26-1 is input to the code channel replica generating unit 21-1 to generate a replica of the code channel signal generated in the wireless transmission/reception device 100a. An output of the code channel replica generating unit 21-1 is multiplied by a propagation channel estimation value input from the propagation channel estimating unit 8 (FIG 5) in an MCI (Multi-Code Interference) replica generating unit 22-1, thereby generating an MCI replica for the $C_1$.

The MCI replica for the $C_1$ is subtracted from a signal input from a demultiplexing unit 6 (FIG. 5) in the adding unit 23-2, to perform interference removal. Data on $C_2$ is detected using a signal from which the MCI replica for the $C_1$ is subtracted.

In the case of $C_2$, the same process as in the case of $C_1$ is performed. In this case, a spreading code used in the despreading unit 24-2, a modulation method used in the demodulation unit 25-2, and a coding rate used in the decoding unit 26-2 each correspond to $C_2$.

The code channel signal detecting unit 20-2 outputs the information bit for the $C_2$ to the outside of the successive canceller unit 18, and simultaneously, outputs the coding bit LLR to the code channel replica generating unit 21-2.

As in the case of $C_1$, a code channel replica for the $C_2$ is generated from the coding bit LLR in the code channel replica generating unit 21-2, and an MCI replica for the $C_2$ is generated in the MCI replica generating unit 22-2. In addition, in the adding unit 23-3 (not shown), the MCI replica for the $C_2$ is subtracted from a signal from which the MCI replica for the $C_1$ is subtracted.

Data on $C_3$ is detected using a signal from which the MCI replica for the $C_2$ is subtracted. Processes such as data detection, MCI replica generation or MCI removal are performed until information bits for all the code channels $C_1$ to $C_N$ are detected.

Next, a process of the demodulation unit 25-1 (FIG. 7) will be described. Processes of the demodulation units 25-2 to 25-N are the same as the process of the demodulation unit 25-1, and thus, description thereof will be omitted. here, the case that the demodulation unit 25-1 adopts the QPSK modulation will be described.

It is assumed that a QPSK symbol transmitted in the wireless transmission/reception device 100a is X, and a symbol after despreading in the wireless transmission/reception device 200a is Xc. If bits forming the symbol X are $b_0$, $b_1$ ($b_0$, $b_1$ = ±1), X may be expressed by the following formula (1).

$$X = \frac{1}{\sqrt{2}}\left(b_0 + jb_1\right) \qquad \cdots \quad (1)$$

Herein, j represents an imaginary number unit. LLR $\lambda(b_0)$ of the bit $b_0$ is calculated from the estimation value Xc in the reception device of X, by the following formula (2).

$$\lambda(b_0) = \frac{2\,\mathrm{Re}(X_c)}{\sqrt{2}(1-\mu)} \qquad \cdots \quad (2)$$

Herein, Re ( ) represents a real part of a complex number, and $\mu$ represents an equivalent amplitude after propagation channel compensation. For example, if a propagation channel estimation value of a k-th subcarrier is H(k), and if a propagation channel compensation weight of a multiplied MMSE standard is W(k), the $\mu$ becomes W(k) H(k). That is, $\lambda(b_1)$ can be calculated by exchanging a real part and an imaginary part of $\lambda(b_0)$ in the formula (2).

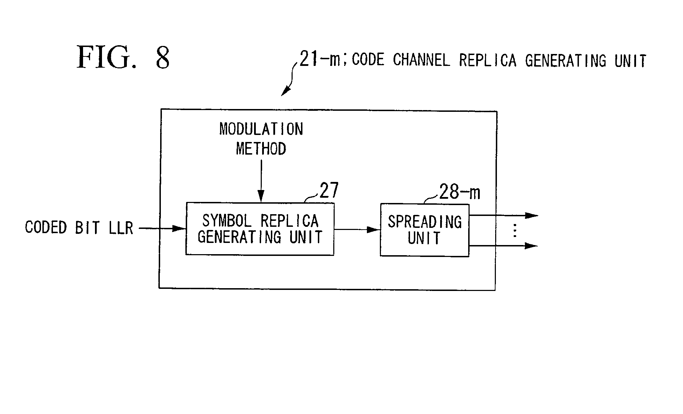

FIG. 8 is a schematic block diagram illustrating the configuration of a code channel replica generating unit 21-m (m=1 to (N-1)) (FIG. 7) according to the first embodiment of the present invention. The code channel replica generating unit 21-m includes a symbol replica generating unit 27 and a spreading unit 28-m.

The code channel replica generating unit 21-m generates a replica of a modulation symbol from the input coding bit LLR based on the notified modulation method, in the symbol replica generating unit 27. The replica of the modulation symbol is spread and output with a spreading code corresponding to $C_m$ in the spreading unit 28-m.

Next, a process of the symbol replica generating unit 27 (FIG. 8) will be described. here, the case where the QPSK modulation method is adapted will be described. If LLRs of bits which form a QPSK modulation symbol are set to $\lambda(b_0)$, $\lambda(b_1)$, a replica of the QPSK modulation symbol may be expressed by the following formula (3).

$$\frac{1}{\sqrt{2}}\tanh(\lambda(b_0)/2)+\frac{j}{\sqrt{2}}\tanh(\lambda(b_1)/2) \qquad \cdots \qquad (3)$$

In the first embodiment, since the reception quality control unit 35 performs setting so that the MCS (also to be referred to as a reception quality) of at least one code channel among a plurality of code channels to be multiplexed is different from the MCSs of the other code channels, and the wireless transmission unit 34 transmits a signal having an MCS set by the reception quality control unit 35 and generated by multiplexing the plurality of code channels, to the wireless transmission/reception device 200a, the wireless transmission/reception device 200a which receives the signal generated by multiplexing the plurality of code channels from the wireless transmission/reception device 100a can detect each code channel in an appropriate order.

(Second embodiment)

In the first embodiment, a difference in reception quality is made by varying the MCS for every code channel. In the second embodiment, a difference in reception quality is made by varying transmission power for every code channel. That is, a wireless transmission/reception device according to the second embodiment may be the same as the wireless transmission/reception device 200a (FIG. 5) according to the first embodiment, and thus, description thereof will be omitted.

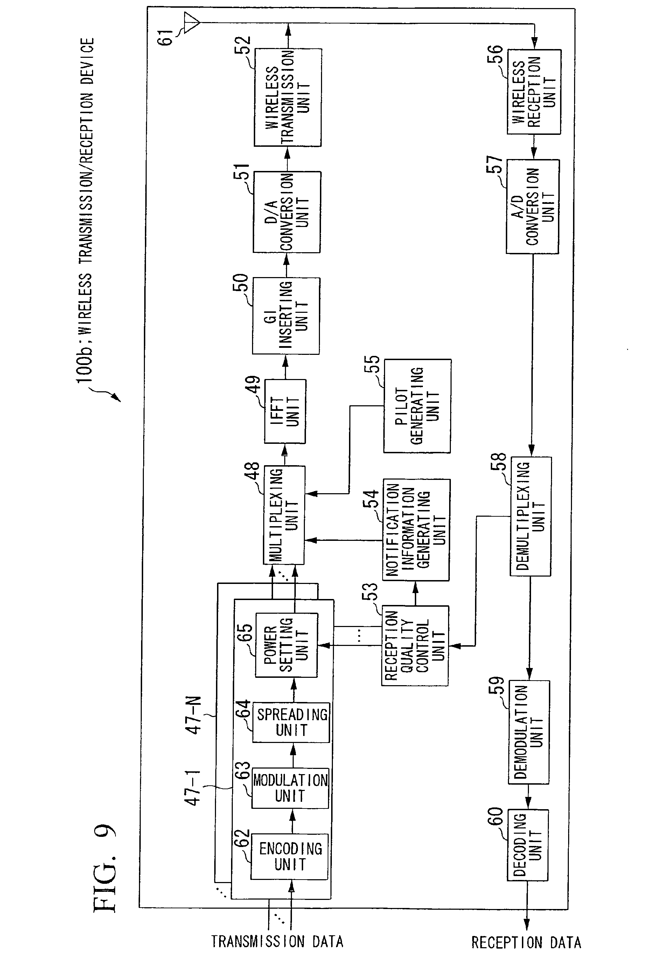

FIG. 9 is a schematic block diagram illustrating the configuration of a wireless transmission/reception device 100b in the second embodiment of the present invention. The wireless transmission/reception device 100b includes code channel signal generating units 47-1 to 47-N, a multiplexing unit 48, an IFFT unit 49, a GI inserting unit 50, a D/A conversion unit 51, a wireless transmission unit 52 (referred to as a transmitting unit), a reception quality control unit 53 (referred to as a reception quality setting unit), a notification information generating unit 54, a pilot generating unit 55, a wireless reception unit 56, an A/D conversion unit 57, a demultiplexing unit 58, a demodulation unit 59, a decoding unit 60, and an antenna 61.
In addition, each of the code channel signal generating units 47-1 to 47-N includes an encoding unit 62, a modulation unit 63, a spreading unit 64 and a power setting unit 65.

Firstly, the wireless transmission/reception device 100b inputs transmission data to the code channel signal generating units 47-1 to 47-N. The code channel signal generating units 47-1 to 47-N perform error correction coding for the transmission data using error correction code in the encoding unit 62. The coded data is mapped to a modulation symbol in the modulation unit 63. The modulation symbol is spread using a spreading code corresponding to each code channel in the spreading unit 64. The power of a signal after spreading is set to make a difference in reception quality for every code channel, based on reception quality control information output from the reception quality control unit 53, in the power setting unit 65.

Outputs of the code channel signal generating units 47-1 to 47-N are input to the multiplexing unit 48, to multiplex a reception quality notification signal for notifying a wireless transmission/reception device to be communicated of the reception quality control information which is an output of the notification information generating unit 54 and a pilot signal which is an output of the pilot signal generating unit 55. An output of the multiplexing unit 48 is frequency-time-transformed in the IFFT unit 49, is guard-interval-inserted in the GI inserting unit 50, is D/A-converted in the D/A conversion unit 51, is wireless-frequency-transformed in the wireless transmission unit 52, and then is transmitted to the wireless transmission/reception device to be communicated through the antenna 61.

In the first embodiment, the MCS of each code channel is varied based on the MCS included in the reporting information symbol sequence. However, in the second embodiment, the transmission power of each code channel is varied. Since the transmission power is known in the wireless transmission/reception device 100b, a difference in reception quality can be determined without using the reporting information from the wireless transmission/reception device to be communicated.

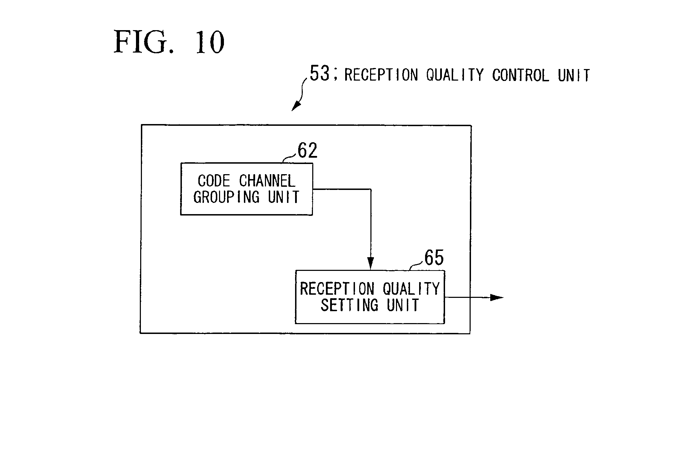

FIG 10 is a schematic block diagram illustrating the configuration of a reception quality control unit 53 (FIG. 9) in the second embodiment of the present invention. The reception quality control unit 53 includes a code channel grouping unit 62 and a reception quality setting unit 65.
The code channel grouping unit 62 is the same as that of the first embodiment, and thus, description thereof will be omitted. The reception quality setting unit 65 sets the transmission power to be allocated to each code channel. The reception quality setting unit 65 calculates the lowest transmission power which is capable of communication in the case that code division multiplexing is not performed, based on the number of code division multiplexing. For example, if the number of code division multiplexing is N, the lowest transmission power is P-10 $\log_{10}$ (N-1). Herein, P represents the transmission power in the case that a quality difference is not made, and has a unit of dB. The reception quality setting unit 65 does not allocate transmission power lower than the calculated lowest transmission power.

Allocation of transmission power in each code channel is performed so that transmission power is constantly maintained within each group of the input code channel group.

In the second embodiment, since the reception quality control unit 53 performs setting so that the transmission power of at least one code channel (referred to as reception quality) among a plurality of code channels to be multiplexed is different from the transmission powers of the other code channels, and the wireless transmission unit 34 transmits a signal which has a transmission power set by the reception quality control unit 35 and is generated by multiplexing the plurality of code channels, to the wireless transmission/reception device to be communicated, the wireless transmission/reception device to be communicated which receives the signal generated by multiplexing the plurality of code channels from the wireless transmission/reception device 100b can detect each code channel in an appropriate order.

(Third embodiment)

In the first and second embodiments, a quality difference is calculated in a wireless transmission device 100a or the like, based on information reported from a wireless transmission/reception device to be communicated. In a third embodiment, the wireless transmission/reception device of a communication source calculates quality difference to report the quality difference to the wireless transmission/reception device to be communicated, and the wireless transmission/reception device to be communicated makes the quality difference for every code channel according to the information reported from the wireless transmission/reception device of the communication source.

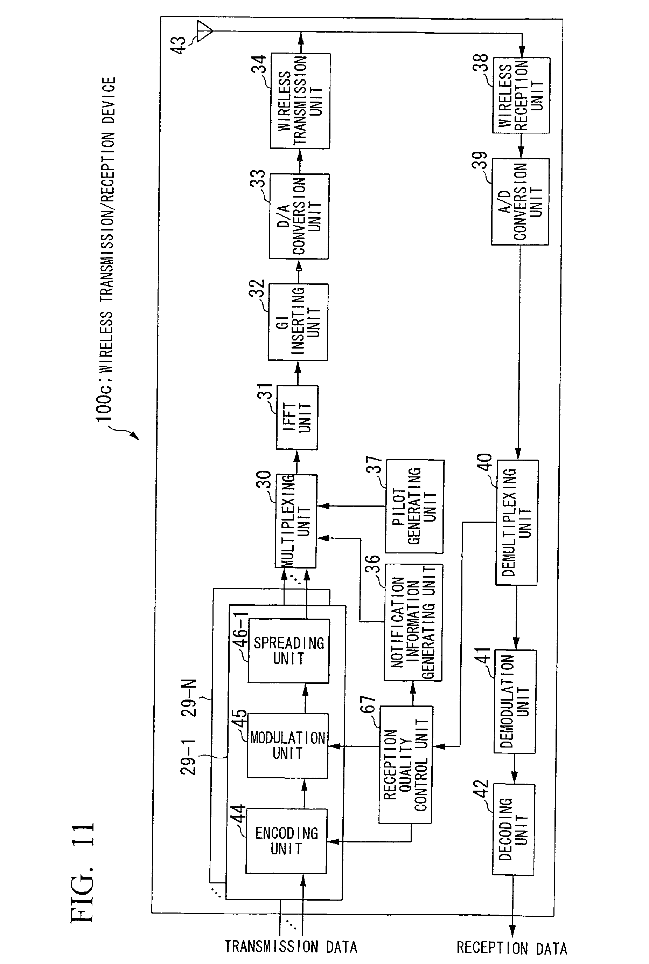

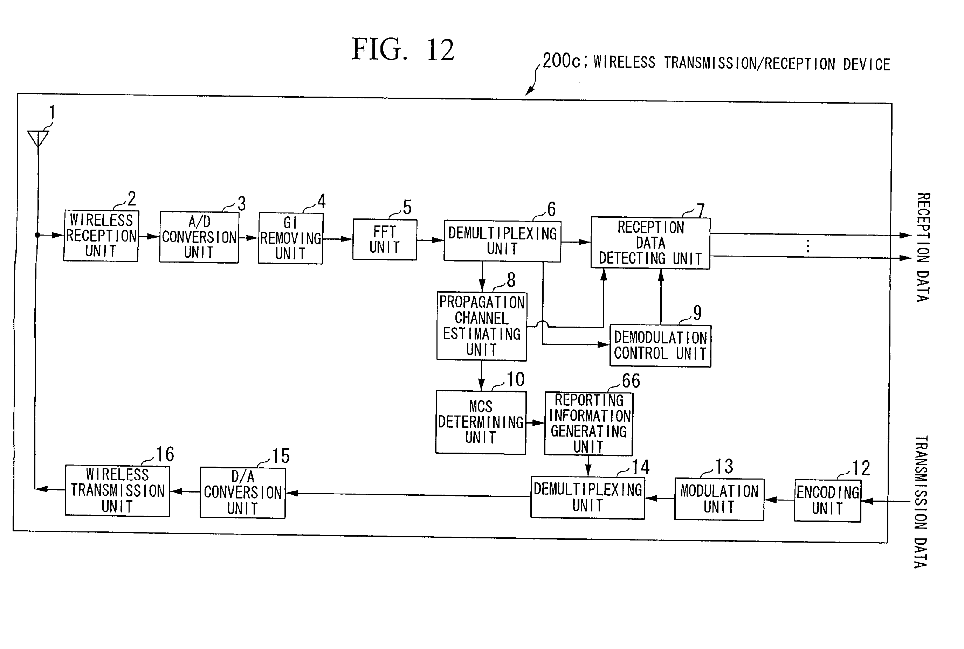

FIG. 11 is a schematic diagram illustrating the configuration of the wireless transmission/reception device 100c according to the third embodiment of the present invention. FIG. 11 illustrates the case of making a difference with an MCS. The difference between the wireless transmission/reception device 100a in the first embodiment described with reference to FIG. 1 and that of the third embodiment is a reception quality control unit 67 (also to be referred to as a reception quality setting unit), and thus, only the reception quality control unit 67 will be described. The reception quality control unit 67 generates reception quality control information which is MCS information in each code channel, based on reporting information indicated by reporting information symbol sequences which are transmitted from a wireless transmission/reception device 200c (FIG. 12).

FIG 12 is a schematic diagram illustrating the configuration of the wireless transmission/reception device 200c according to the third embodiment of the present invention. The difference between the wireless transmission/reception device 200a in the first embodiment described with reference to FIG. 5 and that of the third embodiment is a reporting information generating unit 66, and thus, description of the reporting information generating unit 66 will be described herein.

An MCS determined in an MCS determining unit 10 is input to the reporting information generating unit 66. The reporting information generating unit 66 sets an MCS in each code channel and generates a reporting information symbol sequence for reporting to the wireless transmission/reception device to be communicated. In the case that the MCS in each code channel is set in the wireless transmission/reception device 200c, it is not necessary to determine a signal detection order in a reception data unit 7, since the order determined in the wireless transmission/reception device 200c may be used.

In the third embodiment, since the reception quality control unit 67 performs setting so that an MCS of at least one code channel among a plurality of code channels to be multiplexed is different from MCSs of the other code channels, and a wireless transmission unit 34 transmits a signal which has an MCS set by a reception quality control unit 35 and is generated by multiplexing the plurality of code channels, to the wireless transmission/reception device 200c, the wireless transmission/reception device 200c which receives the signal generated by multiplexing the plurality of code channels from the wireless transmission/reception device 100c can detect each code channel in an appropriate order. Further, since the reception quality control unit 67 can set the MCSs of the code channels, based on the reception quality information notified from the wireless transmission/reception device 200c, the reception quality control unit 67 can detect each code channel in a more appropriate order in consideration of a receiving status of the wireless transmission/reception device 200c.

In the above described embodiments, programs for realizing the functions of the respective units of the wireless transmission/reception device 100a, 100b and 100c or of the respective units of the wireless transmission/reception device 200a and 200c are recorded on a recording medium capable of computer-reading, and then the programs recorded on the recording medium are read in a computer system, thereby controlling the wireless transmission/reception device 100a, 100b and 100c or the wireless transmission/reception device 200a and 200c. here, "computer system" includes hardware such as an OS or peripheral device.

Further, "recording medium capable of computer-reading" includes a portable medium such as a flexible disc, a magnetic optical disc, a ROM, a CD-ROM or the like, and a storage device such as a hard disc installed in a computer system. In addition, "recording medium capable of computer-reading" includes a medium which dynamically stores a program for a short time like a communication line in the case that the program is transmitted through a network such as the Internet or a communication linkage such as a telephone linkage, and a medium which stores a program for a certain amount of time like a volatile memory in a computer system which becomes a server or a client in that case. The program may realize a part of the above described functions, and also may realize a combination of the above described functions and a program pre-recorded in the computer system.

Hereinbefore, the embodiments of the invention have been described with reference to the drawings, but the specific configuration is not limited to the embodiments, and a range of designs without departing from the spirit of the invention will be included in the scope of claims.

Industrial applicability

The invention can be applied to a wireless transmission device, a wireless communication system and a wireless transmission method in which a wireless reception device which receives a signal generated by multiplexing a plurality of code channels can detect each code channel in an appropriate order.

**Claims**

1. A wireless transmission device which communicates with a wireless reception device, comprising:

   a reception quality setting unit which sets the reception quality of at least one code channel among a plurality of code channels to be multiplexed to be different from the reception quality of the other code channels; and
   a transmitting unit which transmits a signal which has the reception quality set by the reception quality setting unit and is generated by multiplexing the plurality of code channels, to the wireless reception device.

2. The wireless transmission device according to claim 1, wherein the reception quality setting unit performs setting so that the average of the reception quality of the plurality of code channels to be multiplexed is the same between the plurality of code channels to be multiplexed.

3. The wireless transmission device according to claim 1, wherein the reception quality setting unit performs setting so that a reception quality of at least one code channel group among a plurality of code channel groups to be multiplexed which is grouped from the plurality of code channels is different from the reception quality of the other code channel groups.

4. The wireless transmission device according to claim 3, wherein the reception quality setting unit performs setting so that the average of the reception quality of the plurality of code channel groups to be multiplexed is the same between the plurality of code channel groups to be multiplexed.

5. The wireless transmission device according to claim 1, wherein the reception quality setting unit performs setting so that a reception quality to be set to each code channel is higher than the lowest reception quality.

6. The wireless transmission device according to claim 1, wherein the reception quality setting unit determines the lowest reception quality based on a multiplexed number of the code channels.

7. The wireless transmission device according to claim 1, wherein the reception quality setting unit uses a modulation method or a coding rate as the reception quality.

8. The wireless transmission device according to claim 1, wherein the reception quality setting unit uses transmission power as the reception quality.

9. The wireless transmission device according to claim 1, wherein the reception quality setting unit sets the reception quality of the code channels based on reception quality information which is notified from the wireless reception device.

10. A wireless communication system which comprises a wireless transmission device and a wireless reception device, the wireless transmission device comprising:

   a reception quality setting unit which sets the reception quality of at least one code channel among a plurality of code channels to be multiplexed to be different from the reception quality of the other code channels; and a transmitting unit which transmits a signal which has the reception quality set by the reception quality setting unit and is generated by multiplexing the plurality of code channels, to the wireless reception device, and the wireless reception device comprising:

a reception unit which receives a signal transmitted by the transmitting unit and generated by multiplexing the plurality of code channels; and
a code channel detecting unit which detects a code channel having a high reception quality earlier than a code channel having a low reception quality from the signal generated by multiplexing the plurality of code channels.

11. A wireless transmission method using a wireless transmission device which communicates with a wireless reception device,
the wireless transmission device comprising:

setting the reception quality of at least one code channel among a plurality of code channels to be multiplexed to be different from the reception quality of the other code channels; and
transmitting a signal which has a reception quality set in the reception signal setting process and is generated by multiplexing the plurality of code channels, to the wireless reception device.

# FIG. 1

100a; WIRELESS TRANSMISSION/RECEPTION DEVICE

EP 2 192 711 A1

# FIG. 2

| MCS | MODULATION METHOD | CODING RATE |
|-----|-------------------|-------------|
| 1 | QPSK | 1/3 |
| 2 | QPSK | 1/2 |
| 3 | 16QAM | 1/3 |
| 4 | QPSK | 3/4 |
| 5 | 16QAM | 1/2 |
| 6 | 16QAM | 3/4 |
| 7 | 64QAM | 3/4 |

# FIG. 3

35 ; RECEPTION QUALITY CONTROL UNIT

62
CODE CHANNEL GROUPING UNIT

REPORTING INFORMATION SYMBOL SEQUENCE

64
RECEPTION QUALITY SETTING UNIT

63
LOWEST QUALITY SETTING UNIT

FIG. 4

(a)

(b)

REPORTED MCS

| | |
|---|---|
| #6 | MCS |
| #5 | MCS |
| #4 | MCS |
| #3 | MCS |
| #2 | MCS |
| #1 | MCS |

REPORTED MCS

| | |
|---|---|
| #6 | MCS-3 |
| #5 | MCS+3 |
| #4 | MCS-2 |
| #3 | MCS+2 |
| #2 | MCS-1 |
| #1 | MCS+1 |

FIG. 5

200a; WIRELESS TRANSMISSION/RECEPTION DEVICE

RECEPTION DATA

TRANSMISSION DATA

1

| 2 WIRELESS RECEPTION UNIT | 3 A/D CONVERSION UNIT | 4 GI REMOVING UNIT | 5 FFT UNIT | 6 DEMULTIPLEXING UNIT | 7 RECEPTION DATA DETECTING UNIT |

8 PROPAGATION CHANNEL ESTIMATING UNIT

9 DEMODULATION CONTROL UNIT

11 REPORTING INFORMATION GENERATING UNIT

10 MCS DETERMINING UNIT

16 WIRELESS TRANSMISSION UNIT

15 D/A CONVERSION UNIT

14 DEMULTIPLEXING UNIT

13 MODULATION UNIT

12 ENCODING UNIT

EP 2 192 711 A1

18

# FIG. 6

7 ; RECEPTION DATA DETECTING UNIT

17

SIGNAL DETECTION
ORDER DETERMINING
UNIT

RECEPTION
QUALITY
INFORMATION

18

SUCCESSIVE
CANCELLER UNIT

FROM
DEMULTIPLEXING
UNIT

RECEPTION DATA

FROM PROPAGATION CHANNEL ESTIMATING UNIT

19

# FIG. 7

EP 2 192 711 A1

18; SUCCESSIVE CANCELLER UNIT

# FIG. 8

21-m; CODE CHANNEL REPLICA GENERATING UNIT

MODULATION
METHOD

CODED BIT LLR →

27

SYMBOL REPLICA
GENERATING UNIT

28-m

SPREADING
UNIT

FIG. 9

100b; WIRELESS TRANSMISSION/RECEPTION DEVICE

TRANSMISSION DATA

47-1    47-N

62  ENCODING UNIT
63  MODULATION UNIT
64  SPREADING UNIT
65  POWER SETTING UNIT
48  MULTIPLEXING UNIT
49  IFFT UNIT
50  GI INSERTING UNIT
51  D/A CONVERSION UNIT
52  WIRELESS TRANSMISSION UNIT

61

53  RECEPTION QUALITY CONTROL UNIT
54  NOTIFICATION INFORMATION GENERATING UNIT
55  PILOT GENERATING UNIT

RECEPTION DATA

60  DECODING UNIT
59  DEMODULATION UNIT
58  DEMULTIPLEXING UNIT
57  A/D CONVERSION UNIT
56  WIRELESS RECEPTION UNIT

FIG. 10

53; RECEPTION QUALITY CONTROL UNIT

62

CODE CHANNEL
GROUPING UNIT

65

RECEPTION QUALITY
SETTING UNIT

# FIG. 11

100c; WIRELESS TRANSMISSION/RECEPTION DEVICE

29-1  29-N

| 44 | 45 | 46-1 |
|---|---|---|
| ENCODING UNIT | MODULATION UNIT | SPREADING UNIT |

30 MULTIPLEXING UNIT

31 IFFT UNIT

32 GI INSERTING UNIT

33 D/A CONVERSION UNIT

34 WIRELESS TRANSMISSION UNIT

43

67 RECEPTION QUALITY CONTROL UNIT

36 NOTIFICATION INFORMATION GENERATING UNIT

37 PILOT GENERATING UNIT

TRANSMISSION DATA

RECEPTION DATA

42 DECODING UNIT

41 DEMODULATION UNIT

40 DEMULTIPLEXING UNIT

39 A/D CONVERSION UNIT

38 WIRELESS RECEPTION UNIT

EP 2 192 711 A1

# FIG. 12

200c; WIRELESS TRANSMISSION/RECEPTION DEVICE

EP 2 192 711 A1

FIG. 13

FIG. 14

FIG. 15

81; BASE STATION

82a; TERMINAL

82b; TERMINAL

FIG. 16

CODE

FREQUENCY

CH3
CH2
CH1

ALLOCATE TO TERMINAL 82a

TIME

**INTERNATIONAL SEARCH REPORT**

| International application No. |
| PCT/JP2008/066460 |

**A. CLASSIFICATION OF SUBJECT MATTER**
*H04J11/00*(2006.01)i, *H04B1/707*(2006.01)i

According to International Patent Classification (IPC) or to both national classification and IPC

**B. FIELDS SEARCHED**

Minimum documentation searched (classification system followed by classification symbols)
H04J11/00, H04B1/707

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-179573 A  (Matsushita Electric<br>Industrial Co., Ltd.),<br>27 June, 2003 (27.06.03),<br>Par. Nos. [0080] to [0091]<br>& WO 2003/017547 A1    & EP 1416657 A1<br>& KR 2004017858 A     & AU 2002318614 A1<br>& US 2004/0174812 A1   & CN 1568592 A<br>& JP 4119696 B2 | 1,5,8-11<br>3,7<br>2,4,6 |
| Y | WO 2005/078955 A1  (NEC Corp.),<br>25 August, 2005 (25.08.05),<br>Par. Nos. [0202], [0203], [0224] to [0228]<br>& EP 1717968 A1      & US 2007/0155433 A1<br>& KR 2007011304 A     & CN 1965501 A | 3,7 |

| ☒ | Further documents are listed in the continuation of Box C. | ☐ | See patent family annex. |

| * | Special categories of cited documents: |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    05 December, 2008 (05.12.08) | Date of mailing of the international search report<br>    16 December, 2008 (16.12.08) |
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/066460 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2006-222872 A  (Nippon Telegraph And Telephone Corp.),<br>24 August, 2006 (24.08.06),<br>Full text; all drawings<br>(Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007245651 A

**Non-patent literature cited in the description**

- VSF-OFCDM USING 2-DIMENTIONAL SPREADING AND CHARACTERISTICS THEREOF. **MAEDA ; ARATA ; ABETA ; SAWAHASHI.** Technology Report RCS2002-61. The Institute of Electronics, Information and Communication Engineers, May 2002
- **ISHIHARA ; TAKEDA ; ADACHI.** DS-CDMA FREQUENCY AREA MAI CANCELLER. *Technology Report RCS 2004-316,* January 2005
- INTERFERENCE CANCELLER IN DOWNLINK USING TRANSMISSION POWER CONTROL OF MC-CDMA. **AKITA ; SUYAMA ; FUKAWA ; SUZUKI.** Technology Report RCS 2002-35. The Institute of Electronics, Information and Communication Engineers, April 2002